# NEW EUROPEAN PATENT SPECIFICATION

(11) **EP 3 261 849 B2**
(45) Date of publication and mention of the opposition decision: **07.06.2023**
(45) Mention of the grant of the patent: 16.10.2019
(21) Application number: 16704916.2
(22) Date of filing: 12.02.2016
(51) Int. Cl.: B42D 25/29, B42D 25/351, B42D 25/355, B42D 25/47

(54) **IMPROVEMENTS IN SECURITY DOCUMENTS**
VERBESSERUNGEN AN SICHERHEITSDOKUMENTEN
AMÉLIORATIONS APPORTÉES À DES DOCUMENTS DE SÉCURITÉ

(30) Priority: 24.02.2015 GB 201503038
(43) Date of publication of application: 03.01.2018
(73) Proprietor: Portals Paper Limited, Overton, Hampshire RG25 3JG (GB)
(72) Inventor: HENDERSON, Peter, Frome Somerset BA11 2DU (GB); SUGDON, Matthew Charles, Basingstoke Hampshire RG24 9RU (GB); STEWART, Georgina, Whitchurch Hampshire RG28 7LN (GB)
(74) Representative: Boult Wade Tennant LLP
(86) International application number: PCT/GB2016/050337
(87) International publication number: WO 2016/135444

(56) References cited:
- EP-A1- 0 059 056
- EP-A2- 1 854 641
- WO-A2-2004/028825
- DE-A1-102004 026 050
- DE-A1-102008 030 694
- DE-A1-102011 120 850
- DE-T2- 69 808 082
- DE-T5-112006 003 410
- US-A1- 2005 211 403
- US-A1- 2008 122 218

## Description

The present invention is directed towards a security document comprising an at least partially transparent protective layer overlying a fibrous substrate layer and an elongate security element partially embedded in the fibrous substrate layer. The invention further relates to a method of manufacturing such a security document.

Security documents and booklets such as passports, passbooks, identification documents, certificates, licences and cheque books commonly comprise one or more data pages on which information is provided. For example, as disclosed in WO-A-2010/040987, a passport booklet typically comprises a cover (having a front and a back) and a plurality of internal pages (sometimes known as visa pages) therebetween. Typically the visa pages are made from paper having a grammage of around 85 gsm and are sewn together. The cover is adhered to the outside of the visa pages and thereby protecting the stitch line. An RFID chip or similar device can be provided within the cover for electronic detection and further security.

At least one data page is provided integrally with one of the visa pages, usually sewn into the stitch line and/or as part of the cover. The data pages commonly comprise one or more base layers of a fibrous substrate, such as paper, overlaid by a layer of polymer laminate, usually applied as a film or lacquer. The fibrous substrate layers are usually made, for example, from paper or cotton fibres and usually have a grammage of around 110 gsm.

The base layer typically has a number of security features, such as watermarks and machine readable printing. In particular, cylinder mould or electrotype watermarks may be formed in the fibrous substrate during manufacture. Personalised information relating to the owner of the security document, such as their name, address, nationality, date of birth and photograph, may be subsequently printed onto the base layer before the laminate layer is applied.

The laminate layer usually has one or more further security features, such as holograms, colour changing inks or other optically variable elements. Holograms can be provided in alignment with the personalised information and/or security features of the base layer. For example, the laminate layer may be arranged to make a watermark in the base layer visible only when viewed from certain angles. The laminate layer is attached to the fibrous substrate by an adhesive, which prevents the removal of the laminate layer without destroying the personalised information printed on the base layer.

WO-A-2004028825 discloses a security paper used for producing documents of value, such as banknotes or similar, and consisting of a creasable multilayer substrate comprising at least one paper layer and at least one film. EP-A-1854641 discloses a banknote having two polymer outer layers and an intermediate layer lying between the outer layers. The outer layers are directly joined to each other at the corners. The intermediate layer consists of paper particularly security paper. The outer layers are directly joined to each other in parts at the edges. DE-T-69808082 discloses a windowed security thread having a matt non-reflective surface. DE-T-112006003410 discloses a method of manufacturing a security substrate comprising the steps of manufacturing an elongate fibrous tape and fabricating at least one security feature in or on the tape. A fibrous base substrate is formed by depositing fibres on to a support surface and the tape is incorporated within the base substrate to form the security substrate during the formation of the base substrate using a cylinder mould paper making machine.

However, it has been found that counterfeiters are able to manufacture counterfeit security documents from original security documents by splitting the base layer through the plane of the ply. This enables the laminate layer and personalised information to be separated from the part of the base layer containing one or more security elements, such as a watermark. The counterfeiter can print new personalised information on this part of the base layer and then apply a new laminate layer containing reproduced security features within it. As a result, the reproduced data page will include a base layer having some of the security features of the original base layer.

An object of the present invention is to improve the security of security documents by preventing adaptation by counterfeiters, whether by splitting or other means, and by improving the ability of any such adaption to be recognised by a machine or eye.

The present invention therefore provides a security document as defined in claim 1.

If the protective layer is split from at least a part of the fibrous substrate layer then the security element tears the fibrous substrate layer. The counterfeiter would be unable to reuse any portion of the fibrous substrate layer since the damage thereto would be easily identifiable to an inspector.

Security features generally fall in two categories, overt and covert. Overt security features are ideally easily recognisable to a layperson without the need for an additional device, whilst being difficult to counterfeit or simulate. Covert security features are generally not made public and are preferably only detectable with the aid of special devices. The security element of the present invention acts as a covert feature since a counterfeiter will not be able to readily identify it.

Preferably at least the at least one exposed region of the security element is: substantially transparent to the naked eye when viewed in reflected light incident thereupon; or substantially the same colour and/or texture as the fibrous substrate layer when viewed in reflected light incident thereupon, such that the exposed regions are substantially indistinguishable to the naked eye when viewed in reflected light incident thereupon.

The protective layer preferably comprises a lacquer coating or polymeric laminate of one or more layers. In a particular embodiment the protective layer comprises a multilayer polymeric laminate having at least one holographic structure and/or at least one security print layer. The at least one exposed region of the security element is at least partially adhered to the protective layer by an adhesive. Furthermore, the security element is preferably at least partially adhered to the fibrous substrate layer by an adhesive layer.

In a preferred embodiment the security element comprises at least one covert security feature which is invisible to the naked eye and machine detectable and/or visible to the naked eye in non-visible light. The at least one covert security feature is preferably in the form of a logo, symbol, indicia or other recognisable shape. Further preferably the at least one covert security feature is a UV-responsive coating.

Preferably at least one printed region at least partially overlies the at least exposed region of the security element. The at least one printed region preferably forms shapes, patterns and/or other indicia. The at least one printed region preferably forms indicia representing personal data relating to an owner of the security document.

In a preferred embodiment the fibrous substrate layer comprises a watermark and the at least one exposed region of the security element overlies the watermark. In a further preferred embodiment the security element is also at least partially exposed at an opposing side of the fibrous substrate layer. The fibrous substrate layer preferably comprises at least one aperture therethrough and at least one edge of the at least one exposed region is preferably exposed by the at least one aperture.

In an embodiment the security document comprises a second layer of fibrous substrate.

The security document is preferably a document of value selected from a banknote, a cheque, a certificate, a passport, a passport page, an identification card and a drivers licence.

The present invention further provides a method of manufacturing the aforementioned security document as defined in claim 11.

The method preferably further comprises the step of, before the drying step, combining the fibrous substrate layer with a second fibrous substrate layer, said second fibrous substrate layer being formed in a separate forming step. During the application of the protective layer an adhesive and/or lacquer is preferably pressed into a region underneath the surface of the fibrous substrate layer. The application of the protective layer preferably comprises: applying a multi-layered polymeric laminate structure to the fibrous substrate layer, the laminate structure comprising a carrier layer, a release layer, an anti-scratch layer and at least one adhesive layer; and removing the carrier layer from the laminate structure.

By way of example only, embodiments of a security document, its method of manufacture and a security document incorporating the security document are now described with reference to, and as show in, the accompanying drawings, in which:
Figure 1A is a plan view of a security document of the present invention;
Figure 1B is a cross-sectional side elevation of the security document of Figure 1A through section A-A;
Figure 1C is a cross-sectional side elevation of the security document of Figure 1A through section B-B;
Figure 1D is a cross-sectional side elevation of the security document of Figure 1A through section B-B when formed with two fibrous substrate layers;
Figure 2A is a cross-sectional side elevation of a section of a paper-making machine for use in a method of manufacturing the security document of Figure 1;
Figure 2B is a detailed cross-sectional side elevation of a cylinder mould cover section of the paper-making machine of Figure 2A;
Figure 2C is a detailed cross-sectional side elevation of a cylinder mould cover section of the paper-making machine of Figure 2A in use;
Figure 3A is a plan view of a further embodiment of a security document of the present invention;
Figure 3B is a cross-sectional side elevation of the security document of Figure 3A through section C-C;
Figure 3C is a cross-sectional side elevation of the security document of Figure 3A through section C-C when formed with two fibrous substrate layers;
Figure 4 is a cross-sectional side elevation of a section of a paper-making machine for use in a method of manufacturing the security document of Figure 3A;
Figure 5A is a plan view of a further embodiment of a security document of the present invention;
Figure 5B is a cross-sectional side elevation of the security document of Figure 5A through section E-E;
Figure 5C is a cross-sectional side elevation of the security document of Figure 5A through section D-D;
Figure 5D is a cross-sectional side elevation of the security document of Figure 5A through section D-D when formed with two fibrous substrate layers;
Figure 6 is a cross-sectional side elevation of a section of a paper-making machine for use in a method of manufacturing the security document of Figure 5A;
Figure 7A is a plan view of a further embodiment of a security document of the present invention;
Figure 7B is a cross-sectional side elevation of the security document of Figure 7A through section G-G;
Figure 7C is a cross-sectional side elevation of the security document of Figure 7A through section F-F;
Figure 7D is a cross-sectional side elevation of the security document of Figure 7A through section G-G when formed with two fibrous substrate layers;
Figure 8 is a plan view of yet a further embodiment of a security document of the present invention; and
Figure 9 is a cross-sectional side elevation of a protective layer suitable for the security document of the present invention.

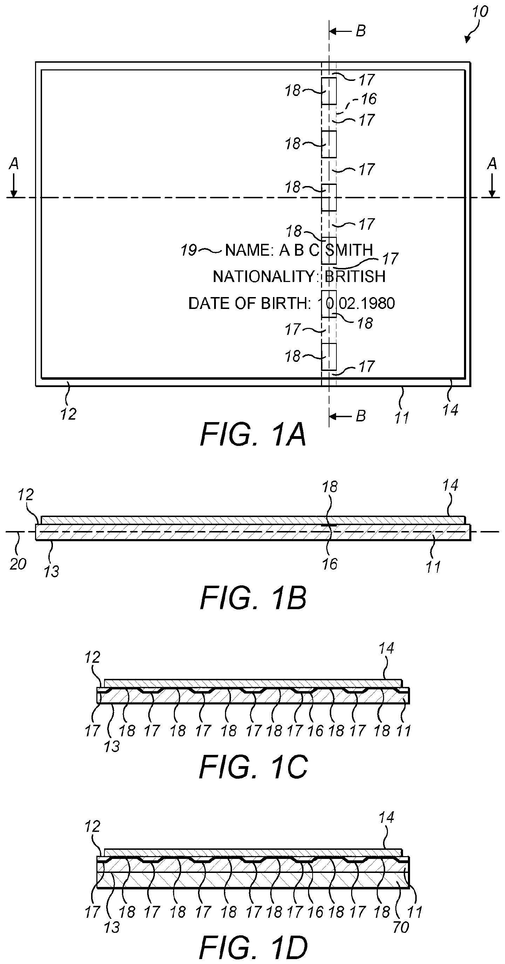

Figures 1A to 1C illustrate one embodiment of the security document 10 of the present invention. The security document 10 comprises a layer 11 of a fibrous substrate, such as paper, having first and second opposing surfaces 12, 13 and a protective layer 14 applied to the first surface 12. The fibrous substrate layer 11 preferably has a grammage of at least 85gsm. The protective layer 14 is at least partially transparent such that the fibrous substrate layer 11 is at least partially visible through the protective layer 14.

The protective layer 14 is relatively thin, preferably approximately 10µm thick, and substantially fully transparent or semi-transparent. The protective layer 14 preferably comprises a coating of lacquer, a thin film or a polymeric laminate, the application and structure of which will be described in further detail below. Preferably, although not shown in Figures 1A to 1C, the protective layer 14 includes one or more security features, such as holograms, colour changing inks or other optically variable elements to make it more difficult to reproduce by a counterfeiter. The security features may be applied using a transfer layer such that they are located underneath the protective layer 14. Thus the protective layer 14 can provide a security function to, as well as protecting against the wear of, the fibrous substrate layer 11.

An elongate security element 16 is partially embedded within the fibrous substrate layer 11 such that it comprises a plurality of embedded regions 17 and exposed regions 18. The embedded regions 17, illustrated in Figure 1A by broken lines, are not exposed at the first surface 12 and the exposed regions 18 are exposed at the first surface 12. The portions of the fibrous substrate layer 11 between the embedded regions 17 and the first surface 12 are known in the art as "bridges". The regions of the fibrous substrate layer 11 at the first surface 12 in which the exposed regions 18 form are known as "windows".

The security element 16 is adhered to the protective layer 14 at the exposed regions 18. In particular, an adhesive is provided between the protective layer 14 and security element 16, particularly in the case of the protective layer 14 being a polymeric film. The security element 16 may also be coupled to the fibrous substrate layer 11, for example by an adhesive or the like.

The security element 16 is preferably formed from an elongate thread (i.e. a strip, band or ribbon) of an impermeable material which is preferably clear and substantially transparent. Suitable materials for forming the security element 16 include polyethylene terephthalate (PET), oriented polypropylene (OPP), polyethylene (PE) or polyketone (PK). The security element 16 is preferably between 11µm and 25µm thick and is preferably less than approximately 2.5 mm wide, and is more preferably approximately 2mm wide.

The exposed regions 18 of the security element 16 are substantially indistinguishable to the naked eye when viewed in reflected light incident upon the first surface 12 (i.e. through the protective layer 14). In particular, the exposed regions 18 are indistinguishable from the fibrous substrate layer 11 or protective layer 14. This reduces the likelihood of a counterfeiter identifying the security element 16 prior to attempting a counterfeit.

If the security element 16 is substantially transparent and clear along a substantial portion of its length it is substantially invisible and the fibrous substrate layer 11 is visible beneath it. The embedded regions 17 of the security element 16 may be opaque, such that the security element 16 comprises bands of transparent and opaque regions. A suitable coating or other masking feature may be applied to the security element 16 to achieve the opacity, such as metallised regions, print or magnetic materials.

In a further embodiment, at least the exposed regions 18 of the security element 16 are of the same colour, and possibly visually the same texture, as the fibrous substrate layer 11, the protective film 14 or any other printed materials on the surface of the fibrous substrate layer 11 or protective layer 14, for example by the application of an appropriate matt coating. Therefore, the security element 16 and fibrous substrate layer 11 or the protective layer 14 cannot be distinguished from one another.

The security element 16 may further comprise covert features disposed in at least one exposed region 18 and/or along its length. These covert features cannot be seen in visible light by the naked eye, but can be machine read and/or viewed by the naked eye in other forms of light. For example, the security element 16 may comprise regions of having properties selected from at least one of magnetic (which may be coded), luminescent including fluorescent and phosphorescent, conductivity or the like. Such covert features may be provided as logos, symbols, indicia or other recognisable shapes.

In one particular embodiment the security element 16 is coated with a material responsive only to UV light, such as organic or inorganic UV fluorescing inks, dyes or pigments, primers, zinc sulphide, liquid crystals, metallic flakes and tinting coats. WO-A-9739428 discloses suitable luminescent materials. If the security element 16 is coated with the material all of the way along its length (i.e. over both the embedded and exposed regions 17, 18) then, when viewed in UV light, the embedded regions 17 will visible, but the intensity of the reflected light therefrom will be relatively lower. Indeed, the security element 16 may be visible in reflected UV light from both the first and second surfaces 12, 13 if the fibrous substrate layer 11 is sufficiently thin. Since the UV response varies along the length of the security element 16, an inspector can identify if an expected variance is not present and detect a counterfeit security document 10.

Preferably the security element 16 is not visible to the naked eye when the first or second surface 12, 13 are viewed in transmitted light, i.e. with the light source on the opposing side of the security document 10 to the viewer. For example, the security element 16 may have the same opacity as the fibrous substrate layer 11 and/or protective layer 14.

The security document 10 preferably further comprises at least one printed region 19 on the first surface 12 of the fibrous substrate layer 11 and/or on the exposed regions 18 of the security element 16. The at least one printed region 19 preferably forms one or more shapes, patterns, or other indicia visually recognisable to a user or machine readable. For example, the at least one printed region 19 may form a logo, picture, code, letters, numbers, symbols and/or other such elements. One or more of the printed regions 19 may partially overlie one or more of the exposed regions 18, or one or more of the printed regions 19 may be located entirely on an exposed region 18. One or more of the printed regions 19 may be of the same colour, and possibly visually the same texture, as at least the exposed regions 18 of the security element 16 such that the exposed regions 18 and printed regions 19 are substantially indistinguishable from one another.

In one particular embodiment, the security document 10 is a passport and comprises a booklet having a plurality of pages and the personalised data page. The fibrous substrate layer 11 and protective layer 14 form the personalised data page. However, it will be appreciated that the security document 10 may be any other suitable document of value, such as a banknote, cheque, certificate, passport, passport page, identification card, drivers licence or the like.

Thus, as illustrated, a plurality of printed regions 19 in the form of indicia represents personal data relating to the owner of the security document 10. The personal data can comprise any suitable data relating to the owner of the security document 10, such as their name, address, nationality, date of birth, photograph and/or additional biometric information. The printed regions 19 may also be provided in the form of a machine readable zone, which preferably comprises letters, numbers and/or other symbols, which can be scanned and processed using optical recognition to retrieve (possibly coded) data.

The security document 10 can additionally comprise various other security features within the fibrous substrate layer 11. One such security feature is a cylinder mould watermark, in which some regions of the watermark are more dense, or thicker, than the rest of the fibrous substrate layer 11 and/or some regions of the watermarks are less dense, or thinner, than the rest of the fibrous substrate layer 11. Another security feature is an electrotype watermark, in which some regions of the electrotype watermark are less dense than the rest of the fibrous substrate layer 11. Security fibres, planchettes and/or particles are other security features which may be entirely or partially embedded within the fibrous substrate layer 11. For example, they fibres may be coloured, metallic, photochromic, iridescent, luminescent, fluorescent, infrared transmitting and/or the like.

Typically a counterfeiter would attempt to adapt the security document 10 such that the printed regions 19 relate to a different person other than the original owner of the security document 10, whilst retaining the security features provided in the fibrous substrate layer 11 to avoid detection. To do so, they would attempt to split the security document 10, along a split plane 20 between the first and second surfaces 12, 13 of the fibrous substrate layer 11, into a first portion and a second portion. The split plane 20 is a plane of failure inherent within layers of fibrous substrate of at least 40 gsm and above. Typically the split plane 20 is towards the centre of the fibrous substrate layer 11 (i.e. midway between its surfaces) and is substantially parallel to the opposing surfaces of the layer. However, the positioning of the split plane 20 may be influenced by other factors, such as the fibrous substrate layer 11 thickness or whether the protective layer 14 is a lacquer layer and has been partially absorbed within the fibrous substrate layer 11 (as described below).

The first portion, which typically includes the first surface 12, at least part of the fibrous substrate layer 11, the printed regions 19 and the protective layer 14, is discarded by the counterfeiter. The counterfeiter would then attempt to reuse the second portion, which includes the second surface 13 and at least part of the fibrous substrate layer 11 (including the security features therein), by applying thereon new printed regions 19 representing new personalised data.

However, in splitting the fibrous substrate layer 11 of the present invention, the security element 16 is arranged to tear at least part of the second portion. This would result in permanent, irreparable damage to the fibrous substrate of the second portion and, if positioned suitably (such as over a watermark), the other security features contained therein. As a result the counterfeiter would be unable to reuse the second portion to produce a counterfeit security document.

The positioning of the split plane 20 and arrangement of the security element 16 will affect the tearing of the fibrous substrate layer 11. The security element 16 may be sufficiently deeply embedded within the fibrous substrate layer 11 towards the second surface 13 such that it is embedded beyond the split plane 20. In a preferred arrangement, the security element 16 is approximately 19µm thick and is located midway between the first and second surfaces 12, 13 at a depth of 70µm from the first surface 12. The presence of an adhesive between the security element 16 and the fibrous substrate layer 11 (such as if the security element 16 is coated in adhesive) may cause tearing of the second portion even if the security element 16 is not embedded into the fibrous substrate layer 11 beyond the split plane 20.

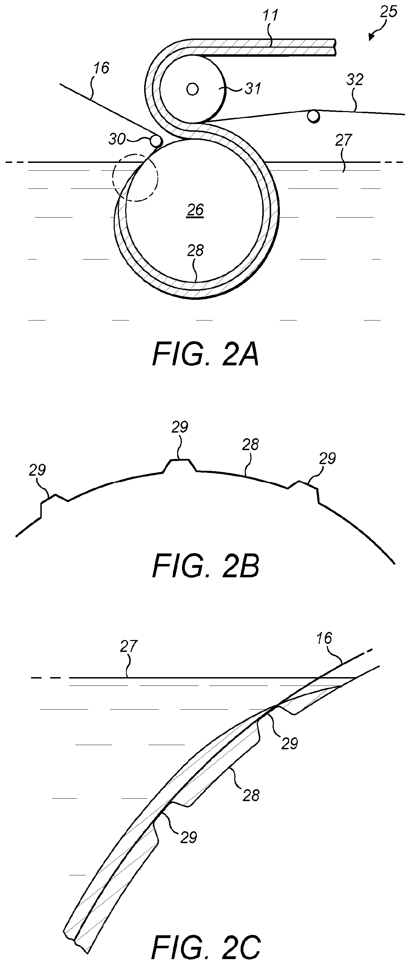

The security document 10 of the aforementioned embodiment of the present invention is preferably produced in a similar manner to the method disclosed in EP-A-0059056. As illustrated in Figures 2A-2C, a cylinder mould papermaking machine 25 comprises a cylinder mould 26 rotating in a vat of aqueous fibrous stock 27. The fibrous stock 27 may comprise a range of fibre types, including synthetic or natural fibres, or a mixture of both. The actual preparation of the fibres is unrestricted by the invention, and will depend upon the effect desired in the fibrous substrate layer 11. As a general consideration, security documents 10, such as banknotes, passports, identification cards and so on, need to be hard wearing, resilient, and self-supporting, and so an appropriate fibre mix is preferably selected.

The cylinder mould 26 is covered with a porous support surface, such as a porous wire mesh, which forms a cylinder mould cover 28. As the cylinder mould 26 rotates, the liquid within the fibrous stock 27 passes through the porous support surface of the cylinder mould cover 28. The fibres are deposited on the support surface and the fibrous substrate layer 11 is thereby formed.

The cylinder mould cover 28 comprises a plurality of raised regions 29. The raised regions 29 may be formed by, as illustrated in Figures 2A-2C and disclosed in EP-A-0059056, embossed regions of the cylinder mould cover 28. Alternatively the raised regions 29 may be formed from electrotypes (i.e. raised impervious elements) attached to the cylinder mould cover. Such an arrangement is disclosed in WO-A-2005/069231.

A guide 30 directs the security element 16 into contact with each raised region 29 as the raised region 29 enters the fibrous stock 27 so that the security element 16 is lying over the raised region 29 as fibres begin to deposit on the cylinder mould cover 28. Fibres are deposited above and below the security element 16, but substantially none are deposited where the security element 16 contacts the raised regions 29, thereby forming the exposed regions 18. The embedded regions 17, or bridges, are formed by the deposition of fibres between adjacent raised regions 29 on the cylinder mould cover 28.

An adhesive layer or other appropriate coating with adhesive properties may be applied to at least one side of the security element 16 prior to its contact with the raised regions 29. The adhesive, as discussed in WO-A-00/39291, assists in the formation of the fibres around the security element 16 to form the appropriate pattern of exposed and embedded regions, 17, 18. For example, the adhesive layer may be applied uniformly to one side of the security element 16 such that the side is fully covered within the fibrous substrate layer 11. The adhesive layer may be applied in bands on the opposing side of the security element 16 such that fibres do not form in the regions without the adhesive layer, which will go on to form the exposed regions 18. As previously discussed, in addition to assisting in the formation of the fibrous substrate layer 11 the adhesive layer enhances the tearing of the fibrous substrate layer 11 when it is split.

The cylinder mould cover 28 may also comprise other raised regions or electrotypes to form cylinder mould watermarks and/or electrotype watermarks in the fibrous substrate layer 11. Furthermore, security fibres, planchettes and/or particles may be injected into the fibrous stock 27 to form within the fibrous substrate layer 11.

As the layer 11 is formed, it is couched from the cylinder mould cover 28 as a continuous web, for example by a couch roll 31. The couch roll 31 is used to transfer the layer 11 from the cylinder mould cover 28 to a felt 32 (formex) which carries the web from the wet end of the papermaking machine 25 to a press section (not shown in the drawings). Water is extracted from the wet fibrous web and the web of paper undergoes a drying process. Water jets or the like may be used to remove fibres from the exposed regions 18 of the security element 16. The dried web is initially cut along cutting lines to form a plurality of interim sheets, which are stacked in reams of typically 500 sheets. These interim sheets are typically printed and cut into individual smaller sheets, each of which may form a security document 10, or a part of a security document 10.

If the security document 10 is a passport, the smaller sheets form a data page and, after cutting, the data page is bound with, for example, a cover and a plurality of internal pages. Usually the printed regions 19 and protective layer 14 are applied after the passport has been bound. However, in alternative production methods they may be applied before binding.

The printed regions 19 are applied to the first surface 12 and/or security element 16. In particular, the printed regions 19 containing non-variable information (such as the words "Name", "Date of Birth" etc illustrated in Figures 1A) may be applied before cutting and the printed regions 19 containing variable or personalised information (such as the name or date of birth of the owner of the security document 10) may be applied after cutting. Preferably the printed regions 19 comprise an ink, but may comprise a composition which includes an identifiable property. For example, optically variable compositions such as liquid crystal pigments, interference pigments, optically variable magnetic interference pigments and optically variable pigments based on photonic crystal materials may be employed and applied using any suitable method. Ink for non-variable information may be applied using, for example, offset, flexo, gravure, intaglio, screen or letterpress printing methods. The variable or personalised information may be applied using, for example, inkjet, xerography, a transfer process, laser marking, laser perforation or laser engraving.

Finally, the protective layer 14 may be applied to the fibrous substrate layer 11 over the first surface 12, exposed regions 18 of the security element 16 and printed regions 19. The protective layer 14 is preferably hard wearing and resilient to protect the fibrous substrate layer 11, security element 16 and/or printed regions 19 from damage and degradation. The protective layer 14 may comprise a polymeric laminate, a thin film, a lacquer layer or coating or any other suitable transparent or semi-transparent layer, film, coating or layered structure. A lacquer coating may be applied directly to the fibrous substrate layer 11 and exposed regions 18 using heat and/or high pressure and a hot-melt adhesive, or via a transfer layer. The polymeric laminate is preferably a non-self-supporting structure applied by a transfer process, but may also be a polymeric, self-supporting structure, applied to the fibrous substrate layer 11 and exposed regions 18 using adhesive and/or heat sealing. In either process it is to be ensured that the adhesive couples the protective layer 14 to the security element 16.

The polymeric laminate may comprise one or more layers. If formed of a single layer then it may comprise, for example, polyethylene terephthalate (PET), polyvinyl chloride (PVC) or polypropylene (PP). If formed of more than one layer the polymeric laminate is preferably applied using a transfer process.

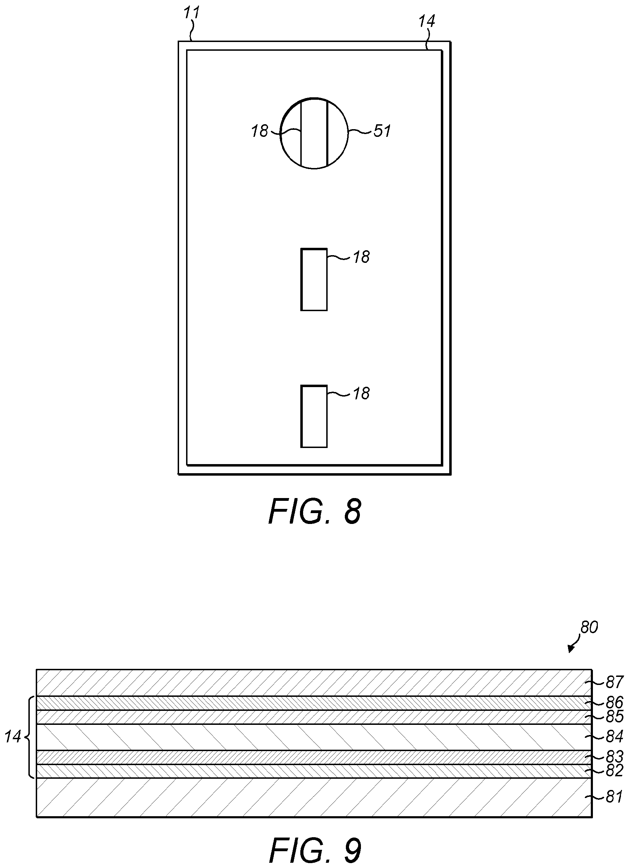

Figure 9 illustrates an embodiment of a suitable multi-layered polymeric laminate structure 80 for forming the protective layer 14 using a transfer process. The structure 80 comprises a carrier layer 81, a release layer 82, an anti-scratch layer 83, an embossing lacquer 84, a reflective layer 85, at least one security print layer 86 and at least one adhesive layer 87 joined to one another. The structure 80 is preferably approximately 10 µm thick.

The carrier layer 81 comprises, for example, PET, and is attached by the release layer 82 to the anti-scratch layer 83. The release layer 82 is typically a polymeric layer based upon a wax, silicone or polytetrafluoroethylene (PTFE) material and is preferably in the range of 0.2 to 2 µm thick. The anti-scratch layer 83 forms the exposed surface of the protective layer 14 on the security document 10 and may in the range of 0.2 to 2 µm thick. The anti-scratch layer 83 is relatively durable and may comprise acrylic or polyurethane base resins with additional additives, such as silica particles, to improve scratch resistance.

The embossing lacquer 84 and reflective layer 85 are optional, but may be incorporated to provide the additional security feature of a holographic structure. A holographic relief structure is formed in the embossing lacquer, which preferably has a thickness in the range of 0.2 to 2 µm. The reflective layer 85 may comprise a vapour deposited metal, such as aluminium, layer or a vapour deposited inorganic coating, such as zinc sulphide, which is substantially transparent and has a high refractive index. In the case of a metal layer, a further barrier layer (not shown) may be applied thereto for preventing damage and corrosion of the metal layer. The barrier layer preferably comprises acrylic or polyester based resins and has a thickness in the range of 0.2 to 2 µm.

The at least one security print layer 86 is also optional and can be used to provide additional security features, such as colourshifting effects or the like. The at least one security print layer 86 may be formed by conventional printing with pigment and dye based systems. Alternatively or in addition, the at least one security print layer 86 may comprise specialist security inks, such as UV responsive fluorescent and phosphorescent materials and/or optically variable colourshifting pigments.

The at least one adhesive layer 87 adheres the protective layer 14 to the fibrous substrate layer 11 and security element 16. Each adhesive layer 87 is preferably in the range of 2 to 6 µm thick.

In Figure 9 the layers 81, 82, 83, 84, 85, 86, 87 are shown extending continuously adjacent to one another. However, the layers 81, 82, 83, 84, 85, 86, 87 may be patterned such that they extend discontinuously adjacent to one another. In particular, the at least one security print layer 86 and/or reflective layer 85 may be provided in the form of one or more logos, symbols or indicia, such as numbers, letters or the like. Thus the at least one adhesive layer 87 may at least partially overlie the reflective layer 85 and/or embossing lacquer 84 (if present), and/or the anti-scratch layer 83.

During production the at least one adhesive layer 87 of the laminate structure 80 is applied to the first surface 12 of the fibrous substrate layer 11. Subsequently, the carrier layer 81 is removed by virtue of the release layer 82.

In any form of the protective layer 14, it is preferable that the adhesive and/or lacquer is pressed into the porous structure of the fibrous substrate at the first surface 12 to provide a thin, relatively stiff, region, for example extending into approximately 10% of the thickness of the fibrous substrate layer 11 from the first surface 12. This region not only provides added support to the layer 11, but also assists in controlling the position of the split plane 20, which will tend to be relatively close to the lacquer or adhesive pressed into the fibrous substrate layer 11.

As will be appreciated, the security document 10 of the present invention may be formed in various different ways. The exposed regions 18 are preferably arranged to reduce the likelihood of detection of the presence of the security element 16, whilst ensuring that the security element 16 will tear the fibrous substrate layer 11 when split by a counterfeiter. Therefore, preferably at least approximately 50%, and more preferably at least approximately 80%, of the length of the security element 16 is embedded within the fibrous substrate layer 11.

In the embodiment of Figures 1A-1C, the exposed regions 18 are located at regular recognisable intervals, although such an arrangement is not necessary. In an embodiment two exposed regions 18 are provided, each towards either edge of the security document 10 only. The security element 16 is preferably embedded at each edge to reduce the likelihood of detection at the edges. However, if the security element 16 has a composition which makes it difficult to identify, it may be exposed along more of its length to ensure that it is effectively coupled to the protective layer 14.

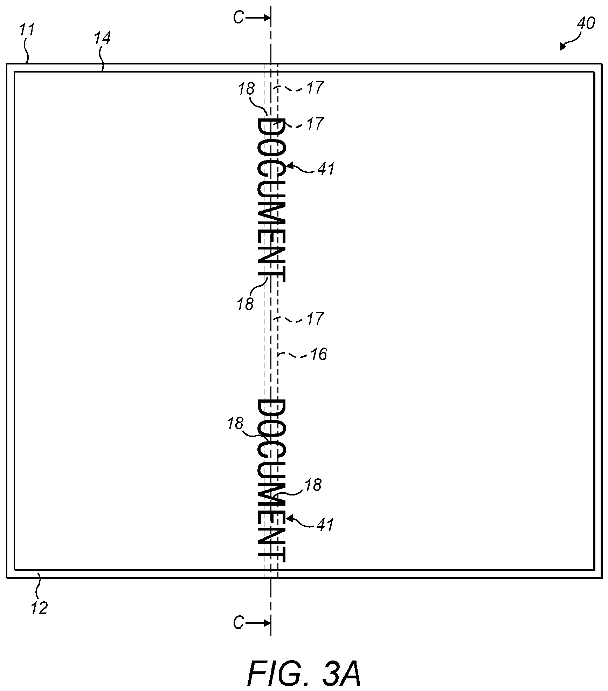

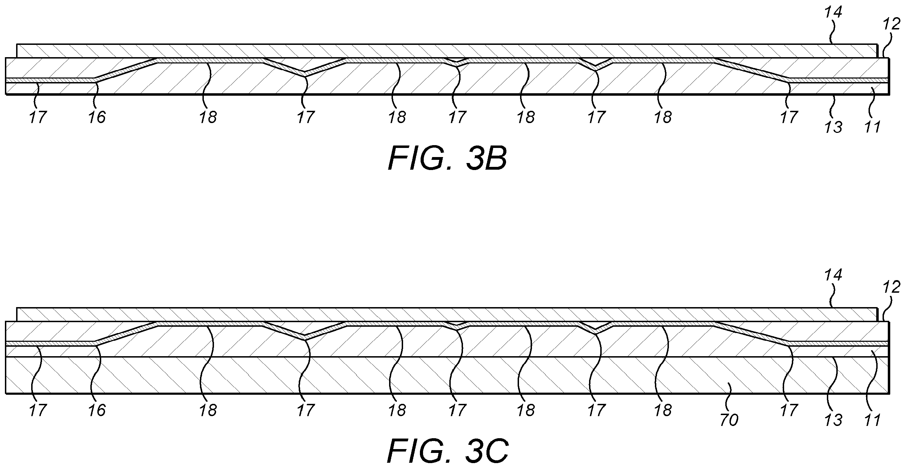

In a further preferred embodiment, the raised regions 29 are shaped and sized to form watermarks in the fibrous substrate layer 11 and around the security element 16. Figure 3A and 3B illustrate an embodiment of a security document 40 of the present invention in which the security element 16 overlies at least one electrotype watermark 41. The use of electrotype watermarks 41 allows for a much greater range of window shapes and more complex window shapes, where the windows themselves define information, designs or patterns.

In the illustrated example the watermarks 41 form the repeating word "DOCUMENT". The security element 16 is exposed at the regions 18 where it overlies the watermarks 41. The fibrous substrate layer 11 forms windows adjacent to the exposed regions 18 which have edges defined by the shape of each letter of "DOCUMENT". It will be appreciated that the electrotype watermarks 41 may be in the form of, whether repeating or not, any suitable logo, symbol or indicia, such as numbers, letters or the like.

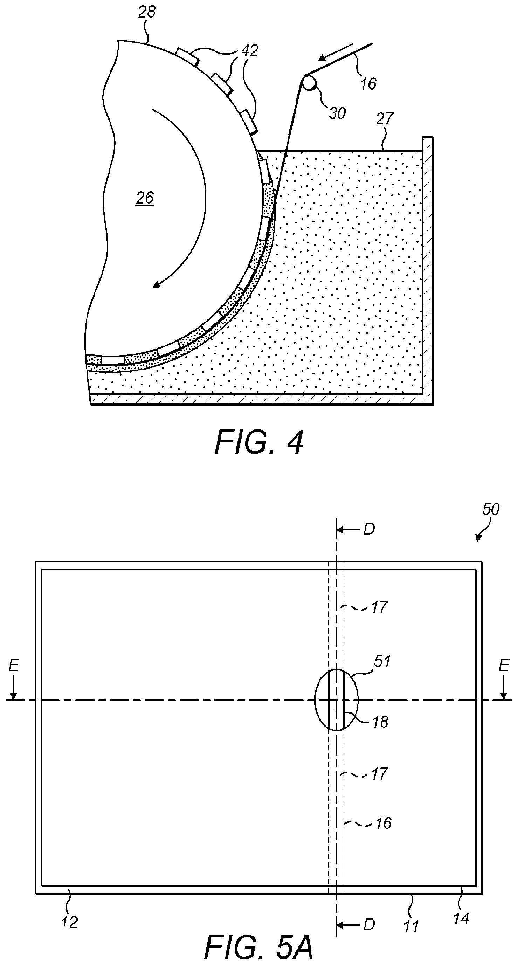

A suitable method of forming such electrotype watermarks 41 in register with a security element 16 is disclosed in, for example, WO-A-2005/069231. As illustrated in Figure 4, the raised regions 29 are formed by electrotypes 42 attached to the cylinder mould cover 28. The electrotypes are typically 2mm or less in width such that fibres can bridge across the side of the security element 16 opposite to the side in contact with the electrotypes 42. The electrotypes 42 comprise raised regions to control the formation of fibres thereon such that light tonal regions are formed in the fibrous substrate layer 11. The guide 30 may be arranged such that the security element 16 is brought into contact with the electrotypes 42 below the surface of the fibrous stock 27 such that some fibres have already deposited on the electrotypes 42 prior to contact. However, the layer of fibres formed will be very thin or sparse such that the security element 16 is exposed at the regions 18.

In the embodiment of Figures 1A-1C the security element 16 is embedded to a consistent depth within the fibrous substrate layer 11. However, as in the embodiment of Figures 3A-3B, the depth of each embedded region 17 may be different to the depth of an adjacent embedded region 17. Such an effect can be achieved by varying the gap between the raised regions 29 on the cylinder mould cover 28.

In a further embodiment the raised regions 29 are sufficiently high such that, as disclosed in EP-A-0059056, fibres are also not deposited on the opposing side of the security element 16 to the raised regions 29. The security element 16 will, therefore, be exposed at both the first and second surfaces 12, 13 of the fibrous substrate layer 11. Such an arrangement would ensure that the fibrous substrate layer 11 would be torn when split by a counterfeiter, regardless of the location of the split plane 20.

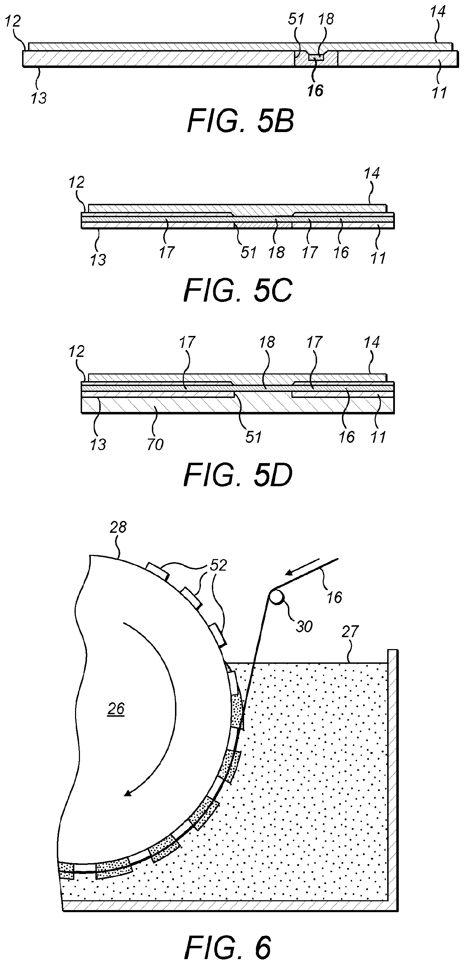

Figures 5A-5C illustrate a further embodiment of a security document 50 of the present invention in which the security element 16 is exposed at regions 18 by at least one aperture 51 through the fibrous substrate layer 11. At least one edge of the region 18 of the security element 16 is exposed by the aperture 51. In Figures 5A-5C both edges of the region 18 of the security element 16 are exposed in the aperture 51, but in other embodiments one edge is embedded within the fibrous substrate layer 11 and the opposing edge is exposed in the aperture 51. The likelihood of tearing the fibrous substrate layer 11 during splitting by a counterfeiter is thereby increased. This is because, as the protective layer 14 is drawn away from the second portion of the fibrous substrate layer 11, the protective layer 14 will pull the security element 16 at the edge of the aperture 51 and the tearing of the fibrous substrate layer 11 is enhanced by this action at the aperture 51 edge.

A suitable method of forming the fibrous substrate 11 and embedding the security element 16 therein as per the embodiment of Figures 5A-5C is disclosed in WO-A-2004/001130. As illustrated in Figure 6, the method is similar to that of described in respect of Figure 4 except that the raised regions are in the form of a blinding material 52 affixed to the cylinder mould cover 28. The blinding material 52 is wider than the security element 16 and restricts the drainage of liquid through the cylinder mould cover 28. Fibres cannot form in a substantive amount around the blinding material 52 such that the aperture 51 is provided through the fibrous substrate layer 11.

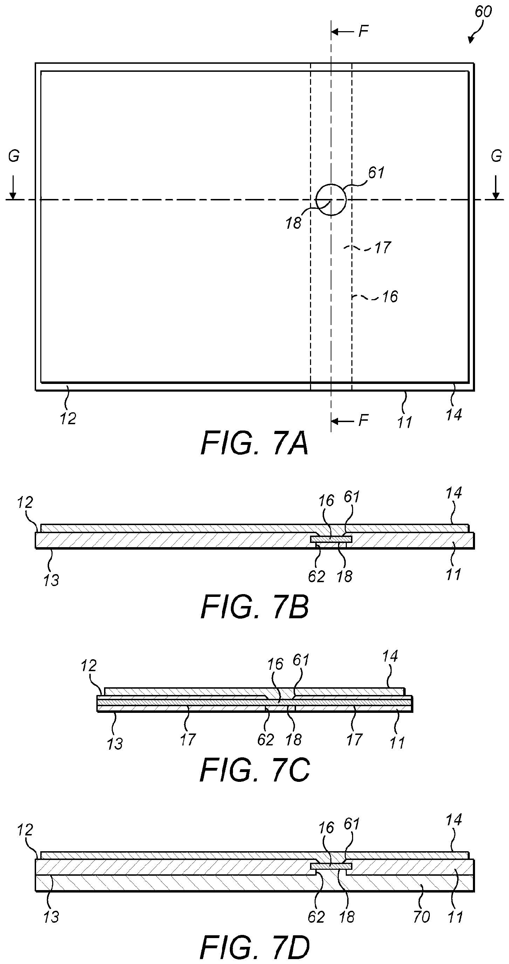

Figures 7A-7C illustrate yet a further embodiment of a security document 60 of the present invention in which the security element 16 is exposed on at least one side in an aperture 61 of the fibrous substrate layer 11. The security element 16 is wider than the aperture 61 such that both edges of the exposed region 18 of the security element 16 are embedded within the fibrous substrate layer 11. A suitable method of forming the fibrous substrate layer 11 and embedded security element 16 is disclosed in WO-A-00/39391, and is similar to that discussed in respect of Figure 6. The security element 16 is relatively wide, such as approximately 6mm. The blinding material produces an aperture 61 (shown as a round exposed region 18 in Figure 7A) at the first surface 12 of the fibrous substrate layer 11. At the second surface 13 the fibres cannot form over the width of the security element 16 due to its width, thereby creating an elongate exposed region 62 extending along the length of the security element 16. The side of the security element 16 adjacent to the second surface 13 may have an adhesive applied uniformly thereto which is subsequently slit such that only the edges of the security element 16 have an adhesive layer. Such an arrangement assists in forming the elongate exposed region 62 of the embodiments of Figures 7A-7C.

There may be a number of apertures 51, 61 in the security document 40, 50 and they may each be of any suitable shape, such as in the form of logos, symbols or indicia. Furthermore, the security document 10, 40, 50, 60 may comprise exposed regions 18 formed from any combination of the aforementioned embodiments. In particular, as illustrated in Figure 8, an exposed region 18 may be formed as a windowed thread as per Figures 1A-1C and an adjacent exposed region 18 may be formed by an aperture 51 as per Figures 5A-5C.

In yet a further embodiment, as illustrated in Figures 1D, 3C, 5D and 7D, the security document 10, 40, 50, 60 comprises a further second layer 70 of fibrous substrate attached to the second surface 13 of the first fibrous substrate layer 11. The second layer 70 may be formed by any means known in the art and subsequently combined with the first layer 11. For example, a shortformer may be employed in which a second vat of fibrous stock, a second cylinder mould and a felt are provided for forming the second layer 70. The felt feeds the second layer 70 into the first layer 11 at the point where the first layer 11 is couched from the cylinder mould 26 onto the couch roll 31. The first and second layers 11, 70 are thereby combined prior to drying. In the embodiments of the security document 50, 60 where the security element 16 is exposed at the second surface of the first layer 11, the second layer 70 directly overlies the exposed security element 16 (as in Figures 5D and 7D). If a counterfeiter attempts to split the security document 50, 60, the security element 16 may tear out at least part of the second layer 70 (for example if it is adhered thereto), thereby rendering it unusable.

Furthermore, it will be appreciated that the security documents 40, 50, 60 and their method of manufacture, discussed with reference to Figures 3 to 7, may comprise any of the features discussed in respect of the embodiments of Figures 1 and 2. In particular, the security documents 10, 40, 50, 60 may also comprise the printed regions 19, the adhesive layers/couplings, the covert features of the security element 16 the other security features and/or the like. In particular, the covert features of the security element 16, the electrotype watermarks 41, apertures 51, 61, exposed regions 18, printed regions 19 and/or other security features may be in register with one another. A counterfeiter would, therefore, need to overcome the added complexity of registering the features to produce an adequate counterfeit.

## Claims

1. A security document (10) comprising:
a protective layer (14) overlying a fibrous substrate layer (11), said protective layer (14) being at least partially transparent such that the fibrous substrate layer (11) is at least partially visible through the protective layer (14); and
an elongate security element (16) partially embedded within the fibrous substrate layer (11),
at least one region (18) of the security element (16) being exposed at a surface (12) of the fibrous substrate layer (11) and being adhered to the protective layer (14), and at least one region (17) of the security element (16) being embedded within the fibrous substrate,
**characterized in that** the at least one exposed region (18) is substantially indistinguishable to the naked eye when viewed in reflected light incident upon the protective layer (14) and the at least one exposed region (18);
wherein the at least one exposed region (18) of the security element (16) is at least partially adhered to the protective layer (14) by an adhesive.

2. A security document (10) as claimed in claim 1 wherein at least the at least one exposed region (18) of the security element (16) is:
- substantially transparent to the naked eye when viewed in reflected light incident thereupon; or
- substantially the same colour and/or texture as the fibrous substrate layer (11) when viewed in reflected light incident thereupon,
such that the exposed regions (18) are substantially indistinguishable to the naked eye when viewed in reflected light incident thereupon.

3. A security document (10) as claimed in any one of the preceding claims wherein the protective layer (14) comprises a lacquer coating, thin film or polymeric laminate of one or more layers.

4. A security document (10) as claimed in any one of the preceding claims wherein the security element (16) is at least partially adhered to the fibrous substrate layer (11) by an adhesive layer.

5. A security document (10) as claimed in any one of the preceding claims wherein the security element (16) comprises at least one covert security feature which is invisible to the naked eye and machine detectable and/or visible to the naked eye in non-visible light.

6. A security document (10) as claimed in any one of the preceding claims wherein at least one printed region (19) at least partially overlies the at least exposed region (18) of the security element (16).

7. A security document (10) as claimed in any one of the preceding claims wherein the fibrous substrate layer (11) comprises a watermark and the at least one exposed region (18) of the security element (16) overlies the watermark.

8. A security document (10) as claimed in any one of the preceding claims wherein the security element (16) is also at least partially exposed at an opposing side of the fibrous substrate layer (11).

9. A security document (10) as claimed in any one of the preceding claims comprising a second layer (70) of fibrous substrate.

10. A security document (10) as claimed in any one of the preceding claims wherein the security document (10) is a document of value selected from a banknote, a cheque, a certificate, a passport, a passport page, an identification card and a drivers licence.

11. A method of manufacturing the security document (10) of any one of the preceding claims comprising the steps of:
depositing fibres on to a support surface to form the fibrous substrate layer (11) as defined in claim 1;
contacting the security element (16) as defined in claim 1 with raised regions of the support surface to partially embed the security element (16) in the fibrous substrate layer (11) and form the at least one exposed region (18) as defined in claim 1;
couching the fibrous substrate layer (11) and security element (16) from the support surface; drying the layer of fibrous substrate (11); and
applying the protective layer (14) as defined in claim 1 over the fibrous substrate layer (11) such that the protective layer (14) is coupled to the at least one exposed region (18).

12. A method as claimed in claim 11 further comprising the step of, before the drying step, combining the fibrous substrate layer (11) with a second fibrous substrate layer (70), said second fibrous substrate layer (70) being formed in a separate forming step.

13. A method as claimed in claim 11 or claim 12 wherein during the application of the protective layer (14) an adhesive and/or lacquer is pressed into a region underneath the surface of the fibrous substrate layer (11).

14. A method as claimed in any one of claims 11 to 13 wherein the application of the protective layer (14) comprises:
applying a multi-layered polymeric laminate structure (80) to the fibrous substrate layer (11), the laminate structure (80) comprising a carrier layer (81), a release layer (82), an anti-scratch layer (83) and at least one adhesive layer (87); and
removing the carrier layer (81) from the laminate structure (80).

## Patentansprüche

1. Sicherheitsdokument (10), umfassend:
eine Schutzschicht (14), die über einer faserigen Substratschicht (11) liegt, wobei die Schutzschicht (14) mindestens teilweise transparent ist, derart dass die faserige Substratschicht (11) mindestens teilweise durch die Schutzschicht (14) sichtbar ist; und
ein längliches Sicherheitselement (16), das teilweise in die faserige Substratschicht (11) eingebettet ist, wobei mindestens ein Bereich (18) des Sicherheitselements (16) an einer Oberfläche (12) der faserigen Substratschicht (11) freiliegt und an der Schutzschicht (14) haftet, und mindestens ein Bereich (17) des Sicherheitselements (16) in das faserige Substrat eingebettet ist,
**dadurch gekennzeichnet, dass** der mindestens eine freiliegende Bereich (18) für das bloße Auge im Wesentlichen nicht unterscheidbar ist, wenn er im reflektierten Licht betrachtet wird, das auf die Schutzschicht (14) und den mindestens einen freiliegenden Bereich (18) einfällt;
wobei der mindestens eine freiliegende Bereich (18) des Sicherheitselements (16) mindestens teilweise an der Schutzschicht (14) über einen Klebstoff haftet.

2. Sicherheitsdokument (10) nach Anspruch 1, wobei mindestens der mindestens eine freiliegende Bereich (18) des Sicherheitselements (16):
- für das bloße Auge beim Betrachten im reflektierten darauf einfallenden Licht im Wesentlichen transparent ist; oder
- im Wesentlichen die gleiche Farbe und/oder Textur wie die faserige Substratschicht (11) beim Betrachten im reflektierten darauf einfallenden Licht aufweist,
derart dass die freiliegenden Bereiche (18) für das bloße Auge beim Betrachten im reflektierten darauf einfallenden Licht im Wesentlichen nicht unterscheidbar sind.

3. Sicherheitsdokument (10) nach einem der vorangehenden Ansprüche, wobei die Schutzschicht (14) eine Lackbeschichtung, einen Dünnfilm oder ein polymeres Laminat aus einer oder mehreren Schichten umfasst.

4. Sicherheitsdokument (10) nach einem der vorangehenden Ansprüche, wobei das Sicherheitselement (16) mindestens teilweise durch eine Klebeschicht an der faserigen Substratschicht (11) haftet.

5. Sicherheitsdokument (10) nach einem der vorangehenden Ansprüche, wobei das Sicherheitselement (16) mindestens ein verdecktes Sicherheitsmerkmal umfasst, das für das bloße Auge unsichtbar und maschinenerfassbar ist und/oder für das bloße Auge im nicht sichtbaren Licht sichtbar ist.

6. Sicherheitsdokument (10) nach einem der vorangehenden Ansprüche, wobei mindestens ein gedruckter Bereich (19) mindestens teilweise über dem mindestens freiliegenden Bereich (18) des Sicherheitselements (16) liegt.

7. Sicherheitsdokument (10) nach einem der vorangehenden Ansprüche, wobei die faserige Substratschicht (11) ein Wasserzeichen umfasst und der mindestens eine freiliegende Bereich (18) des Sicherheitselements (16) über dem Wasserzeichen liegt.

8. Sicherheitsdokument (10) nach einem der vorangehenden Ansprüche, wobei das Sicherheitselement (16) auch mindestens teilweise auf einer gegenüberliegenden Seite der faserigen Substratschicht (11) freiliegt.

9. Sicherheitsdokument (10) nach einem der vorangehenden Ansprüche, umfassend eine zweite Schicht (70) aus faserigem Substrat.

10. Sicherheitsdokument (10) nach einem der vorangehenden Ansprüche, wobei das Sicherheitsdokument (10) ein Wertdokument ist, das ausgewählt ist aus einer Banknote, einem Scheck, einem Zertifikat, einem Reisepass, einer Passseite, einem Personalausweis und einem Führerschein.

11. Verfahren zur Herstellung des Sicherheitsdokuments (10) nach einem der vorangehenden Ansprüche, umfassend die Schritte des:
Abscheidens von Fasern auf einer Trägerfläche, um die faserige Substratschicht (11) nach Anspruch 1 zu bilden;
Kontaktierens des Sicherheitselements (16) nach Anspruch 1 mit erhöhten Bereichen der Trägerfläche, um das Sicherheitselement (16) teilweise in die faserige Substratschicht (11) einzubetten und den mindestens einen freiliegenden Bereich (18) nach Anspruch 1 zu bilden;
Abgautschens der faserigen Substratschicht (11) und des Sicherheitselements (16) von der Trägerfläche,
Trocknens der Schicht aus faserigem Substrat (11), und
Aufbringens der Schutzschicht (14) nach Anspruch 1 über die faserige Substratschicht (11), derart dass die Schutzschicht (14) mit dem mindestens einen freiliegenden Bereich (18) gekoppelt wird.

12. Verfahren nach Anspruch 11, ferner umfassend, vor dem Trocknungsschritt, den Schritt des Kombinierens der faserigen Substratschicht (11) mit einer zweiten faserigen Substratschicht (70), wobei die zweite faserige Substratschicht (70) in einem separaten Formschritt gebildet wird.

13. Verfahren nach Anspruch 11 oder Anspruch 12, wobei während des Aufbringens der Schutzschicht (14) ein Klebstoff und/oder Lack in einen Bereich unterhalb der Oberfläche der faserigen Substratschicht (11) gepresst wird.

14. Verfahren nach einem der Ansprüche 11 bis 13, wobei das Aufbringen der Schutzschicht (14) umfasst:
Aufbringen einer mehrschichtigen polymeren Laminatstruktur (80) auf die faserige Substratschicht (11), wobei die Laminatstruktur (80) eine Trägerschicht (81), eine Trennschicht (82), eine Anti-Kratzschicht (83) und mindestens eine Klebeschicht (87) umfasst, und
Entfernen der Trägerschicht (81) von der Laminatstruktur (80).

## Revendications

1. Document de sécurité (10) comprenant :
une couche de protection (14) superposée à une couche de substrat fibreux (11), ladite couche de protection (14) étant au moins partiellement transparente de telle sorte que la couche de substrat fibreux (11) est au moins partiellement visible à travers la couche de protection (14) ; et
un élément de sécurité allongé (16) partiellement incorporé à l'intérieur de la couche de substrat fibreux (11), au moins une région (18) de l'élément de sécurité (16) étant exposée au niveau d'une surface (12) de la couche de substrat fibreux (11) et étant collée à la couche de protection (14), et au moins une région (17) de l'élément de sécurité (16) étant incorporée à l'intérieur du substrat fibreux,
**caractérisé en ce que** la au moins une région exposée (18) est sensiblement impossible à distinguer à l'œil nu lorsqu'elle est vue dans la lumière réfléchie incidente sur la couche de protection (14) et la au moins une région exposée (18)
dans lequel la au moins une région exposée (18) de l'élément de sécurité (16) est au moins partiellement collée sur la couche de protection (14) au moyen d'un adhésif.

2. Document de sécurité (10) selon la revendication 1, dans lequel au moins la au moins une région exposée (18) de l'élément de sécurité (16) est :
- sensiblement transparente à l'œil nu lorsqu'elle est vue dans la lumière réfléchie incidente sur celle-ci ; ou
- sensiblement de la même couleur et/ou texture que la couche de substrat fibreux (11) lorsqu'elle est vue dans la lumière réfléchie incidente sur celle-ci,
de telle sorte que les régions exposées (18) sont sensiblement impossibles à distinguer à l'œil nu lorsqu'elles sont vues dans la lumière réfléchie incidente sur celles-ci.

3. Document de sécurité (10) selon l'une quelconque des revendications précédentes, dans lequel la couche de protection (14) comprend un revêtement de vernis, un film mince ou un stratifié polymère d'une ou de plusieurs couches.

4. Document de sécurité (10) selon l'une quelconque des revendications précédentes, dans lequel l'élément de sécurité (16) est au moins partiellement collé à la couche de substrat fibreux (11) au moyen d'une couche d'adhésif.

5. Document de sécurité (10) selon l'une quelconque des revendications précédentes, dans lequel l'élément de sécurité (16) comprend au moins une caractéristique de sécurité cachée qui est invisible à l'œil nu et détectable par machine et/ou visible à l'œil nu dans la lumière non visible.

6. Document de sécurité (10) selon l'une quelconque des revendications précédentes, dans lequel au moins une région imprimée (19) se superpose au moins partiellement à la au moins une région exposée (18) de l'élément de sécurité (16).

7. Document de sécurité (10) selon l'une quelconque des revendications précédentes, dans lequel la couche de substrat fibreux (11) comprend un filigrane et la au moins une région exposée (18) de l'élément de sécurité (16) se superpose au filigrane.

8. Document de sécurité (10) selon l'une quelconque des revendications précédentes, dans lequel l'élément de sécurité (16) est également au moins partiellement exposé au niveau d'un côté opposé de la couche de substrat fibreux (11).

9. Document de sécurité (10) selon l'une quelconque des revendications précédentes, comprenant une seconde couche (70) de substrat fibreux.

10. Document de sécurité (10) selon l'une quelconque des revendications précédentes, dans lequel le document de sécurité (10) est un document de valeur choisi parmi un billet de banque, un chèque, un certificat, un passeport, une page de passeport, une carte d'identité et un permis de conduire.

11. Procédé de fabrication du document de sécurité (10) selon l'une quelconque des revendications précédentes, comprenant les étapes de :
dépôt de fibres sur une surface de support pour former la couche de substrat fibreux (11) selon la revendication 1 ;
mise en contact de l'élément de sécurité (16) selon la revendication 1 avec des régions surélevées de la surface de support pour incorporer partiellement l'élément de sécurité (16) dans la couche de substrat fibreux (11) et former la au moins une région exposée (18) selon la revendication 1 ;
couchage de la couche de substrat fibreux (11) et de l'élément de sécurité (16) à partir de la surface de support ;
séchage de la couche de substrat fibreux (11) ; et
application de la couche de protection (14) selon la revendication 1 au-dessus de la couche de substrat fibreux (11) de telle sorte que la couche de protection (14) est couplée à la au moins une région exposée (18).

12. Procédé selon la revendication 11, comprenant en outre, avant l'étape de séchage, l'étape de combinaison de la couche de substrat fibreux (11) avec une seconde couche de substrat fibreux (70), ladite seconde couche de substrat fibreux (70) étant formée dans une étape de formation séparée.

13. Procédé selon la revendication 11 ou la revendication 12, dans lequel pendant l'application de la couche de protection (14) un adhésif et/ou vernis est pressé dans une région en dessous de la surface de la couche de substrat fibreux (11).

14. Procédé selon l'une quelconque des revendications 11 à 13, dans lequel l'application de la couche de protection (14) comprend :
l'application d'une structure de stratifié polymère multicouches (80) à la couche de substrat fibreux (11), la structure de stratifié (80) comprenant une couche de support (81), une couche antiadhésive (82), une couche anti-éraflure (83) et au moins une couche d'adhésif (87), et
le retrait de la couche de support (81) à partir de la structure de stratifié (80).
